# EUROPEAN PATENT APPLICATION

(11) **EP 2 725 063 A1**
(43) Date of publication of application: **30.04.2014**
(21) Application number: 12802113.6
(22) Date of filing: 09.04.2012
(51) Int. Cl.: C08L 69/00, C08G 63/199, C08L 67/02

(54) **SHEET FOR CARD**

(30) Priority: 21.06.2011 JP 2011137862
(71) Applicant: Japan Coloring CO., Ltd., Yokkaichi-shi, Mie 510-0883 (JP)
(72) Inventor: SAKAGAMI, Toshinori, Yokkaichi-shi Mie 510-0883 (JP); HASHIMOTO, Akira, Yokkaichi-shi Mie 510-0883 (JP); TERAJI, Yoshiyuki, Yokkaichi-shi Mie 510-0883 (JP)
(74) Representative: TBK
(86) International application number: PCT/JP2012/059646
(87) International publication number: WO 2012/176533

(57) **Abstract**

Provided is a sheet for card having excellent transparency, heat resistance, and impact strength and good thermal adhesiveness with another sheet constituting a plastic card. The sheet is made of a polymer alloy of an aromatic polycarbonate resin and a copolyester resin having a dicarboxylic acid unit composed mainly of a terephthalic acid unit and a glycol unit composed mainly of a 1,4-cyclohexanedimethanol unit and a 2,2,4,4-tetramethylcyclobutane-1,3-diol unit and having a glass transition temperature of 90°C or greater.

## Description

### Technical Field

The present invention relates to a sheet for card to be used for a variety of plastic cards, particularly, contact or contactless IC cards, and the like.

### Background Art

In recent years, plastic cards such as credit cards, cash cards, ID cards, and ETC cards have been put to practical use widely. These plastic cards are manufactured by overlapping two or more sheets such as over sheet and core sheet one after another, hot pressing these sheets by using a vacuum press to thermally integrated fusion-bond between any two adjacent sheets, and after thermal fusion bonding, punching the resulting laminate into a desired shape by using a punching machine. As a constituent resin of such sheets, a polyvinyl chloride-based resin (which will hereinafter be abbreviated as "PVC") has been used conventionally. This PVC resin sometimes damages an incinerator due to a halogen gas generated during incineration of waste sheets. In addition, a halogen gas-containing exhaust smoke emitted into the air may cause an environmental pollution problem. To prevent such a problem, use of a sheet made of an amorphous aromatic polyester resin (which will hereinafter be abbreviated as "PETG") not generating a halogen gas during incineration of waste sheets has been started. Cards using a PETG sheet have however insufficient heat resistance so that, for example, when a credit card or the like put in a bag is left inside an automobile or when an ETC card is left inside an ETC in-car device installed inside an automobile in a country of high temperatures, the card undergoes deformation such as "warpage" or the ETC card cannot be taken out from the ETC in-car device because of the deformation of the card, respectively. With a view to overcoming such problems, a trial has been made to provide a card having improved heat resistance by using a polymer alloy obtained by melt kneading PETG with a polycarbonate resin (which will hereinafter be abbreviated as "PC"). A sheet made of such a polymer alloy has however problems such as deterioration in printability, for example, offset printability. On the other hand, with the increased interest in security matters, a laser marking method by which a plastic card is exposed to laser beam energy to mark it with characters, symbols, images, and the like has been employed widely particularly in foreign countries. Sheets made of a resin composition obtained by incorporating a laser beam energy absorbing agent in PVC or PETG however have only an insufficient color developing property and therefore lack visibility of characters, symbols, images, and the like. With regard to this problem, when the above-mentioned polymer alloy of PETG and PC obtained by melt kneading is used, the resulting sheet shows an improved laser marking property. A content ratio of PC in the polymer alloy should however be increased in order to impart a sufficient laser marking property to the sheet. The increase in the content ratio then requires an increase in hot pressing temperature in a hot pressing step because sufficient thermal adhesiveness between sheets cannot be secured under temperature conditions equal to those for single use of PVC or PETG. In a vacuum press molding step, however, it prolongs a cycle time of one step of heating from normal temperature to a set temperature and after application of a pressure, cooling to normal temperature, which leads to a problem, that is, reduction in productivity. Further, laser marking is only single color (generally, black) marking so that there has recently been an increasing demand for providing characters in single color and images in full color. An ink accepting layer for sublimation type thermal transfer color printing is therefore formed on the surface of a laser remarkable sheet for card to satisfy this demand for partial full-color printing.

As a solution to these problems, there has been disclosed in Patent Document 9, as a non-laser marking type core sheet or over sheet for card, a sheet that is made of at least three layers, that is, two skin layers and one core layer therebetween and obtained by laminating them through a co-extrusion method. In the sheet, the skin layers are substantially made of an amorphous aromatic polyester resin composition, while the core layer is made of a polycarbonate-based resin composition; and the thickness of the core layer in the total thickness of the sheet accounts for 50% or greater but less than 100%. On the other hand, a sheet suited for laser marking is described, for example, in Patent Documents 1 to 5. Patent Document 6, on the other hand, describes that a multilayer sheet obtained by laminating an elastomer on the back side of a sheet or film of a transparent thermoplastic resin and heat sealing the resulting laminate is preferred as a multilayer structure excellent in laser marking. Patent Documents 7 and 8 propose a multilayer sheet for laser marking suited for a card showing good contrast and having smoothness, a laser marking property, and heat resistance.

Further, Patent Document 10 describes a sheet for card having a color development layer and an adhesive layer on at least one of the surfaces thereof. The color development layer is composed mainly of a polymer alloy of PC and substantially amorphous PETG and it has, as another component, a component developing a color when exposed to laser beam energy. The adhesive layer is composed of substantially amorphous PETG. In the sheet for card proposed in this document, the resin composition constituting the color development layer has a glass transition temperature greater than that of the resin composition constituting the adhesive layer and at the same time, the resin composition constituting the adhesive layer has a glass transition temperature of 80°C. In this Patent Document 10, as PETG constituting the polymer alloy, a resin having a glass transition temperature of 60°C or 80°C is used and as PC, a resin having a glass transition temperature of 160°C is used. In the sheet for card disclosed in this document, the polymer alloy of the color development layer has a glass transition temperature of 90°C or 130°C and the PETG of the adhesive layer has a glass transition temperature of 80°C.

Patent Document 9, however, shows PETG ("Eastar Copolyester 6763", trade name; product of Eastman Chemical) having a glass transition temperature of 80°C as an example of a resin constituting a skin layer and the resin is used in Examples. In this document, PC ("Novarex 7022", trade name; product of Mitsubishi Engineering Plastics) having a glass transition temperature of 160°C is used in Examples as a resin constituting the core layer. A difference in glass transition temperature between the resin constituting the skin layer and the resin constituting the core layer is about 80°C. Such a large difference in glass transition temperature makes it difficult to equalize the two skin layers both present as an outside layer by multilayer coextrusion of three layers of two different kinds by using a coextrusion method. In addition, the skin layer of this sheet made of three layers of two different kinds has insufficient heat resistance. A laminate obtained by hot press lamination of the above-mentioned sheet made of three layers of two different kinds and another sheet constituting the sheet for card by using a vacuum press has therefore a problem, that is, inferiority in releasability when it is taken out from a press plate (mold). Moreover, when an ink accepting layer for sublimation type heat transfer color printing is applied to the surface of the skin layer, there occurs the following problem due to insufficient heat resistance of the skin layer, that is, generation of "wrinkles" in the sheet during a drying step after application of the component for forming an ink accepting layer.

Also in Patent Document 10, the glass transition temperature of PETG constituting the polymer alloy serving as a main component of the color development layer is set at 80°C so that it is impossible to freely increase the glass transition temperature of the polymer alloy. In a sheet formed by multilayer coextrusion of the color development layer made of such a polymer alloy and the adhesive layer made of such PETG having a glass transition temperature of 80°C by using a coextrusion method, the adhesive layer has insufficient heat resistance. In a hot press laminating step of the resulting sheet with another sheet by using a vacuum press, the resulting laminate is, similar to the above-mentioned case, inferior in releasability when taken out from a mold. Moreover, due to poor heat resistance of the resin constituting the adhesive layer, a problem, that is, generation of "wrinkles" occurs in a drying step or the like step. In addition, there occurs another problem such as deterioration in printability, for example, offset printability.

On the other hand, when laser marking-related methods disclosed in Patent Documents 1 to 5 are applied as a plastic card having a transparent over sheet, various problems occur. Patent Document 6 describes that a multilayer sheet obtained by laminating an elastomer on the back side of a sheet or film made of a transparent thermoplastic resin, followed by heat sealing is preferred. When adhesion between the surface layer and the inner layer is poor in this multilayer structure, there occurs a problem, depending on laser marking conditions, that is, swelling or damage of the transparent surface layer due to a gas generated during marking.

With regard to the above-mentioned problem, Patent Document 7 and Patent Document 8 propose a multilayer sheet for laser marking suited for a card showing a good contrast and having smoothness, a laser marking property, and heat resistance. In general, in a step of overlapping two or more sheets one after another in the manufacture of a card, each sheet is transported while being held by vacuum adsorption. By releasing the negative pressure at a predetermined position, the sheets are overlapped one after another. Then, after faces of the sheets to be brought into contact with each other are thermally fusion-bonded using a hot press, the bonded sheets are cut into a desired card shape by using a punching blade. During a manufacturing step of the card, when the multilayer sheet for laser marking proposed by Patent Document 7 or Patent Document 8 is used as an over sheet of the card, even if the negative pressure is released in the transportation step of the sheets, there occurs a problem (sticking to mold), that is, sticking of the sheets to a transportation machine. The problem of so-called "sticking to mold" also occurs in the thermal fusion bonding step of faces to be brought into contact with each other by using a hot press. Moreover, since a gas does not escape smoothly at the interface between the core sheet and the over sheet, gas burn occurs here when they are exposed to laser beam energy, leading to problems such as swelling or damage of the transparent surface layer. Therefore, the multilayer sheet needs further improvement.

On the other hand, there is a method of manufacturing a predetermined card by hot press laminating an over sheet (transparent)/core sheet (white)/over sheet (transparent), punching the resulting laminate to manufacture a blank card (white), and then providing color printing on the surface of the card by using a card printer. In this case, a card printing system can be roughly classified into a direct thermal transfer printing system and an indirect thermal transfer printing system. In the former system, a sublimation type ink is printed on the surface of the card by pressing an ink ribbon directly against the surface of the card. When an over sheet is made of PVC, clear printing can be achieved without any difficulty. The over sheet made of three layers, that is, PETG/PC/PETG, is on the other hand, not preferred because a sublimation type ink has poor "affinity" with PETG of the sheet and therefore there occurs such a phenomenon as unclear printing or partial missing print. In order to achieve clear printing, a water-based (aqueous) polymer solution or a solvent (solvent-based) solution is applied on the surface of the over sheet to form a thin film thereon. After formation of the thin film, a drying step is conducted. Then, the sheet is taken up in a winding step. When the over sheet has insufficient heat resistance, problems such as generation of "wrinkles" and excessive stretching of the sheet occur because the sheet cannot withstand the tension during winding.

### Citation List

### Patent Documents

[Patent Document 1] JP-B-61-11771
[Patent Document 2] JP-B-62-59663
[Patent Document 3] JP-B-61-41320
[Patent Document 4] JP-A-61-192737
[Patent Document 5] JP-B-02-47314
[Patent Document 6] JP-A-07-276575
[Patent Document 7] JP-A-2002-273832
[Patent Document 8] JP3889431
[Patent Document 9] JP3876107
[Patent Document 10] JP4490639

### Summary of the Invention

### Problems to be Solved by the Invention

The present invention has been made with a view to overcoming the above-mentioned problems and relates to a sheet for card to be used for various cards, particularly, plastic cards such as contact or contactless IC cards. In particular, the sheet has high transparency and is excellent in heat resistance and impact resistance. At the same time, the sheet is excellent in thermal adhesiveness with a core sheet (white) or another sheet constituting various plastic cards. Further, a sheet for card made of a composition containing a laser beam energy absorber provides high contrast between a ground color and a printed portion when exposed to laser beam energy and therefore enables clear marking of characters, symbols, images, and the like. Still further, the present invention provides a sheet for card to be used for plastic cards which have heat resistance and is therefore free from generation of "wrinkles" or excessive stretching even in a drying step and a winding step after formation of a thin film suited for sublimation type thermal transfer printing.

The sheet for card according to the present invention embraces all of various sheets constituting the above-mentioned cards such as credit cards, cash cards, ID cards, tag cards, or ETC cards. Specific examples of the sheet constituting the card include over sheet, core sheet, and inlet sheet.

### (Over sheet)

An over sheet is a sheet placed on the surface (outermost side) of a card. For example, it is placed on both side surfaces of a core sheet which will be described later or on both side surfaces of an inlet sheet provided with an IC chip or antenna. When the sheet for card contains a laser beam energy absorber, it constitutes a plastic card as an over sheet having a laser marking function. This means that characters, symbols, images and the like are laser marked on the sheet by exposing it to laser beam energy. The sheet for card according to the present invention is used as an over sheet.

### (Core sheet)

A core sheet is a sheet placed, for example, between an over sheet and another over sheet. The core sheet is provided for use as a white sheet after incorporating, for example, a white dye and/or a white pigment. Using the core sheet as a white sheet can enhance the visibility of characters, symbols, images, and the like laser-marked on the over sheet stacked on the core sheet. The sheet for card according to the present invention is used as a core sheet.

### (Inlet sheet)

Further, an inlet sheet is provided with an IC chip and an antenna pattern having thereon an antenna. In general, an inlet sheet and a core sheet are stacked in a desired order and an over sheet is placed on the outermost side. The sheet for card according to the present invention is used as an inlet sheet.

### Means for solving the Problems

According to the present invention, the following sheets for card are provided.

[1] A sheet for card having a polymer alloy of (A) a copolyester resin and (B) an aromatic polycarbonate resin, wherein the copolyester resin (A) constituting the polymer alloy has (a) a dicarboxylic acid unit composed mainly of a terephthalic acid unit and (b) a glycol unit composed mainly of (I) a 1,4-cyclohexanedimethanol unit (which will hereinafter be abbreviated as "CHDM") and (II) a 2,2,4,4-tetramethylcyclobutane-1,3-diol unit (which will hereinafter be abbreviated as "TMCB"); a ratio of CHDM (I) to TMCB (II), that is, a (I)/(II) ratio is (from 80 to 50)/(from 20 to 50) mol%; the copolyester resin (A) has a glass transition temperature of 90°C or greater; and the copolyester resin (A) and the aromatic polycarbonate resin (B) constituting the polymer alloy are contained in proportions of from 20 to 80 mass% and from 80 to 20 mass%, respectively.
[2] The sheet for card as described above in [1], wherein the sheet for card has a thickness of from 50 to 400 µm.
[3] The sheet for card as described above in [1] or [2], having a resin composition obtained by incorporating, in 100 parts by mass of the polymer alloy, from 0.01 to 3 parts by mass of at least one lubricant selected from fatty acids, fatty acid esters, fatty acid amides, and fatty acid metal salts.
[4] The sheet for card as described above in any of [1] to [3], having a resin composition obtained by incorporating, in 100 parts by mass of the polymer alloy, from 0.0001 to 3 parts by mass of a laser beam energy absorber.
[5] The sheet for card as described above in [4], for use as a laser marking sheet.
[6] The sheet for card as described above in any of [1] to [3], having a resin composition obtained by incorporating, in 100 parts by mass of the polymer alloy, 3 parts by mass or more of a white dye and/or a white pigment.]
[7] The sheet for card as described above in [6], for use as a core sheet.
[8] The sheet for card as described above in any of [1] to [7], which has been, on at least one of the surfaces thereof, matted to give an average surface roughness (Ra) of from 0.1 to 10 µm.

### Advantageous Effects of Invention

The sheet for card according to the present invention has high transparency and is excellent in heat resistance and impact resistance. In addition, it has good thermal adhesiveness with another sheet constituting the card. Further, in a hot press lamination step with another sheet by using a vacuum press as described above, it is excellent in releasability when the laminate is taken out from a mold. Still further, a sheet for card containing a laser beam energy absorber shows high contrast between a ground color and a printed portion when exposed to laser beam energy so that clear marking of characters, symbols, images, and the like can be provided. In addition, it enables clear printing by using a sublimation type ink to be used in a sublimation type heat transfer printing system. Still further, in a winding step after formation of a thin film and drying, even if a tension is applied to the sheet, the sheet is free from wrinkles or excessive stretching. It is therefore suited for use for various cards, particularly, plastic cards such as contact or contactless IC cards.

### Mode for Carrying out the Invention

The best mode for carrying out the sheet for card according to the present invention will hereinafter be described specifically. It should however be borne in mind that the present invention widely embraces sheets for card equipped with the identification matters of the invention and it is not limited to the embodiments described below.

### [1] Constituent material of the sheet for card according to the present invention

The sheet for card according to the present invention is composed of a polymer alloy of (A) a copolyester resin (which will hereinafter be abbreviated as "PCT resin") and (B) an aromatic polycarbonate resin (which will hereinafter be abbreviated as "PC resin").

### (PCT resin constituting the polymer alloy)

The PCT resin constituting the polymer alloy has (a) a dicarboxylic acid unit composed mainly of a terephthalic acid unit and (b) a glycol unit composed mainly of CHDM (I) and TMCB (II). A (I)/(II) ratio is (from 80 to 50)/(from 20 to 50) mol%. The (I)/(II) ratio is preferably (from 70 to 50)/(from 30 to 50) mol%. Excessively greater ratios of CHDM (I) (exceeding 80 mol%) are not preferred because due to crystal formation, the resulting sheet shows anisotropy. In addition, such a sheet is not suited for use because a problem in adhesion or the like occurs. When the ratio of CHDM (I) is excessively small (less than 50%), on the other hand, the resulting sheet has improved heat resistance, but has deteriorated flexibility and in addition, has deteriorated impact strength. In short, when the (I)/(II) molar ratio is outside the above-mentioned range, the resulting sheet has deteriorated transparency, heat resistance, and impact resistance. In addition, good thermal adhesiveness with another sheet cannot be achieved. Further, a sheet for card made of a resin composition obtained by incorporating, in the polymer alloy having a (I)/(II) molar ratio outside the above-mentioned range, a laser beam energy absorber cannot easily be laser marked with high contrast.

The PCT resin constituting the polymer alloy has a glass transition temperature of 90°C or greater, preferably 100°C or greater. A polymer alloy of a PCT resin having a glass transition temperature less than 90°C with a PC resin is inferior in heat resistance. Further, it has a problem in releasability when taken out from a mold in a vacuum hot press lamination step. When an ink accepting layer for sublimation type heat transfer color printing is formed on the surface of a sheet made of a polymer alloy containing a PCT resin having a glass transition temperature less than 90°C, "wrinkles" are generated due to poor heat resistance in a drying step after application of a material for forming the ink accepting layer. Further, when such a sheet is provided with a laser marking function, it has a deteriorated marking property. The glass transition temperature less than the above-mentioned range is therefore not preferred.

As the PCT resin, for example, Eastman Tritan copolyester FX100 (glass transition temperature: 110°C) and Eastman Tritan copolyester FX200 (glass transition temperature: 119°C) (each, trade name; product of Eastman Chemical) are commercially available. As the PCT resin, commercially available products of another grade or synthesized products can also be used insofar as they have properties as described above.

### (PC resin constituting the polymer alloy)

As the PC resin, which is the other component constituting the polymer alloy of the present invention, transparent PC resins are preferred. Although no particular limitation is imposed on the PC resin to be used, those having a melt volume rate of from 4 to 30 cm³/10 min as measured in accordance with ISO1133 are suited. A sheet for card made of a polymer alloy of a PC resin having a melt volume rate less than 4 cm³/10 min with the above-mentioned PCT resin has improved toughness and it is significant in this point. It is however not preferred because it is inferior in forming or molding processability and not suited for practical use. Melt volume rates exceeding 30 cm³/10 min are not preferred because the sheet for card obtained using such a resin has deteriorated toughness.

As the PC resin, for example, "Tarflon FN2200A" and "Tarflon FN2500A" (each, trade name; product of Idemitsu Kosan) are commercially available. As the PC resin, similar to the PCT resin, commercially available products of another grade or synthesized products can also be used insofar as they have properties as described above.

### (Mixing proportion of PCT resin and PC resin constituting the polymer alloy)

With regard to the mixing proportion of the PCT resin having a glass transition temperature of 90°C or greater with the PC resin each constituting the polymer alloy, from 20 to 80 mass% of the PCT resin should be mixed with from 80 to 20 mass% of the PC resin. Mixing proportions of the PC resin less than 20 mass% are not preferred because the resulting sheet has deteriorated heat resistance and toughness. Mixing of such a polymer alloy with a laser beam energy absorber to provide it with a laser color development function is not preferred because the resulting product is inferior in laser development property. When the proportion of the PCT resin is less than 20 mass%, the resulting sheet is inferior in low-temperature thermal adhesiveness with another sheet constituting the card in a hot press lamination step by using a vacuum press. More preferably, from 30 to 70 mass% of the PCT resin is mixed with from 70 to 30 mass% of the PC resin.

What is important here is that the PCT resin in the polymer alloy constituting the sheet for card according to the present invention has, as described above, a glass transition temperature of 90°C or greater and has the above-mentioned units at a predetermined ratio. In addition, the PCT resin and the PC resin each constituting the polymer alloy are contained therein at the above-mentioned proportions. In the present invention, the polymer alloy should satisfy all of these factors. Compared with, for example, a polymer alloy composed of a PCT resin having a glass transition temperature less than 90°C with a PC resin, the polymer alloy to be used in the present invention has improved heat resistance and drastically improved impact resistance. In addition, the sheet for card according to the present invention used as an over sheet, a core sheet, or an inlet sheet has markedly excellent impact resistance while maintaining low-temperature thermal adhesiveness. Unexpectedly, it shows a high contrast ratio when subjected to laser marking, is free from damage or resin burn of the surface layer of the marked portion, and is excellent in laser printability.

### (Preparation of polymer alloy)

In preparing the polymer alloy using the above-mentioned PCT resin and the PC resin, it is the common practice to melt knead and extrude predetermined amounts of the PCT resin and the PC resin at a predetermined temperature by using an extrusion machine, but its preparation process is not particularly limited.

### (Thickness of sheet for card)

The sheet for card according to the present invention has desirably a thickness of from 50 to 400 µm. Sheets having a thickness less than 50 µm are inferior in practical usability because they do not have sufficient impact resistance. Further, such sheets are not preferred because a "warpage" phenomenon occurs in the sheets themselves, which may cause problems in handling of sheets such as transportation. Sheets having a thickness exceeding 400 µm, on the other hand, are inconvenient from the standpoint of the standard of common plastic cards. Common contact or contactless cards are standardized to have a maximum thickness of 800 µm. For example, a plastic card is comprised of, for example, over sheet/core sheet/core sheet/over sheet four layers, over sheet/core sheet/inlet sheet/core sheet/over sheet five layers, over sheet/over sheet/core sheet/core sheet/core sheet/over sheet/over sheet seven layers, or over sheet/over sheet/core sheet/inlet sheet/core sheet/over sheet/over sheet seven layers. When the sheet for card according to the present invention is used as an over sheet, core sheet, or inlet sheet and one of the over sheet, core sheet and inlet sheet has a thickness of 400 µm or greater, the thickness of the other sheet(s) should be made as thin as possible. Then, the over sheet, core sheet, or the like having an extremely small thickness loses its function. Thus, the thickness of the sheet for card becomes an important factor for determining the impact resistance of a plastic card, mass productivity, and specified total thickness of the plastic card.

In a card comprised of, for example, over sheet/core sheet/core sheet/over sheet, by using the sheet for card formed as described above, sufficient thermal adhesiveness can be secured between layers in a hot press lamination step using a vacuum press or the like. Further, the sheet can be taken out from a mold smoothly after hot press lamination. Even under a severe temperature environment, for example, when in countries with high temperature, an ETC card inserted in an ETC in-car device installed in an automobile is left alone or a card is placed for long hours on a dash board, cards excellent in heat resistance and therefore suppressed in deformation such as "warpage" can be provided. Thermal adhesiveness and heat resistance, which are performances contradictory to each other, can be satisfied simultaneously.

### (Lubricant)

In order to stabilize a resin and facilitate molding or forming processing in the present invention, a lubricant is preferably added to the polymer alloy constituting the sheet for card. Examples of the lubricant to be added for the above-mentioned purpose include fatty acids, fatty acid esters, fatty acid amides, and fatty acid metal salts. These lubricants may be used either singly or in combination of two or more. The amount of the lubricant is, based on 100 parts by mass of the polymer alloy, from 0.01 to 3 parts by mass, preferably from 0.05 to 1.5 parts by mass. When the amount is less than 0.01 part by mass, it is difficult to prevent the resin from melting and attaching to a press plate during hot press lamination. Amounts exceeding 3 parts by mass, on the other hand, are not preferred because they cause a problem in thermal adhesiveness between sheets for card constituting a plastic card or with another sheet.

Examples of the above-mentioned fatty acid-based lubricant include stearic acid, palmitic acid, myristic acid, and lauric acid. Examples of the fatty acid ester-based lubricants include butyl stearate, cetyl palmitate, stearic acid monoglyceride, stearic acid diglyceride, stearic acid triglyceride, esters of montan wax, wax esters, dicarboxylic acid esters, and composite esters. Examples of the fatty acid amide-based lubricants include stearic acid amide and ethylenebisstearylamide. Examples of the fatty acid metal salt-based lubricants include calcium stearate, magnesium stearate, zinc stearate, aluminum stearate, and barium stearate.

### (Laser beam energy absorber)

In the present invention, it is preferred to incorporate, in 100 parts by mass of the polymer alloy, from 0.0001 to 3 parts by mass, preferably from 0.001 to 1 part by mass of a laser beam energy absorber. By incorporating a laser beam energy absorber and exposing the resulting sheet to laser beam energy, characters, symbols, images, and the like can be marked. The sheet for card containing a laser beam energy absorber is usually used as an over sheet of a plastic card.

When the amount of the laser beam energy absorber exceeds 3 parts by mass, the resulting sheet for card has deteriorated transparency. At the same time, an excessive increase in absorbed energy amount is apt to deteriorate the polymer alloy resins constituting the sheet. Deterioration in the polymer alloy leads to insufficient contrast. When the amount of the laser beam energy absorber is less than 0.0001 part by mass, on the other hand, the resulting sheet for card cannot easily be provided with a sufficient laser marking property. This makes it difficult to achieve high contrast marking of characters, symbols, images, and the like, compared with a background portion.

Examples of the laser beam energy absorber include carbon black, carbon nanotube, graphite, metal oxides, composite metal oxides, metal sulfides, metal carbonates, metal silicates, and near infrared ray absorbing dyes.

Examples of the metal oxides include zinc oxide, magnesium oxide, aluminum oxide, iron oxide, titanium oxide, silicon oxide, antimony oxide, tin oxide, copper oxide, manganese oxide, cobalt oxide, vanadium oxide, niobium oxide, molybdenum oxide, ruthenium oxide, tungsten oxide, palladium oxide, silver oxide, and platinum oxide. Examples of the composite metal oxides include indium tin oxide (ITO) and indium antimony oxide (ATO).

Examples of the metal sulfides include zinc sulfide and cadmium sulfide. Examples of the metal carbonates include calcium carbonate. Examples of the metal silicates include alumina silicate, iron-containing alumina silicate (mica), hydrous alumina silicate (kaolin), magnesium silicate (talc), calcium silicate, and magnesium silicate.

Examples of the near infrared ray absorbing dyes include polymethine dyes, metal complex dyes, squarylium dyes, cyanine dyes, indoaniline dyes, and diimonium dyes.

Of these laser beam energy absorbers, carbon black is preferred. A mixture between carbon black and at least one selected from the metal oxides, composite metal oxides, metal sulfides, metal carbonates, and metal silicates having an average particle size less than 200 nm is also preferred.

Even when the mixture of carbon black and at least one selected from metal oxides, composite metal oxides, metal sulfides, metal carbonates, and metal silicates other than those exemplified above is used as the laser beam energy absorber, the metal oxide, composite metal oxide, metal sulfide, metal carbonate, or metal silicate has an average particle size at least less than 200 nm, preferably less than 100 nm, more preferably less than 50 nm. When the average particle size of these laser beam energy absorbers exceeds 200 nm, the resulting sheet for card has deteriorated transparency. Using such a sheet for card having deteriorated transparency as an over sheet is not preferred because visibility of, for example, a full color image or the like printed on the core sheet lying below the over sheet becomes inferior.

### (White dye and/or white pigment)

Further, it is preferred to incorporate a white dye and/or a white pigment in an amount of 3 parts by mass or more in 100 parts by mass of the polymer alloy. When the amount of a white dye and/or a white pigment is less than 3 parts by mass, the resulting sheet for card cannot easily have a sufficient white color and is inferior in clearness of a printed image. In addition, when the whiteness is low, an over sheet placed on this white sheet becomes inferior in clearness of laser marking. The amount of the white dye or white pigment may be selected as needed, depending on its kind.

Common plastic cards are each basically comprised of, for example, (1) over sheet, (2) core sheet, (3) core sheet, and (4) over sheet in order of mention. After printing (color printing) on one surface of the core sheet by using a printing system such as offset printing, inkjet printing, or silk screen printing, a transparent over sheet is stacked to form a laminate by using vacuum hot press. In this case, when the core sheet is white, it enables printing (color printing) excellent in clearness. For this purpose, 3 parts by mass or more of a white dye and/or a white pigment is added to 100 parts by mass of the polymer alloy. Amounts of the white dye and/or white pigment less than 3 parts by mass are not preferred because they deteriorate the clearness of the printed image. The upper limit of the amount is preferably 30 mass%. Amounts exceeding 30 mass% are not preferred because the sheet thus obtained has inferior toughness.

No particular limitation is imposed on the white dye and white pigment. Those conventionally added to a plastic card can be used. Generally, titanium oxide is suited because it is excellent in hiding ability, light resistance, and the like. It is also possible to adjust the color tone by adding, to titanium oxide, another organic pigment or dye, or a fluorescent whitener.

### (Matting)

At least one of the surfaces of the sheet for card is preferably matted. The average surface roughness (Ra) achieved by matting is preferably from 0.1 to 10 µm, more preferably from 0.5 to 5 µm. When the average surface roughness achieved by matting is less than 0.1 µm, air cannot be easily removed from between any two adjacent sheets of a card comprised of, for example, over sheet/core sheet/over sheet in hot press lamination step and air bubbles which have remained in the card obtained as an end product cause blisters on the surface of the card. In addition, gas burn occurs during exposing the over sheet to laser beam energy and thereby laser marking it. This gas burn is not preferred because it causes defects such as discoloration of the card or deterioration in laser marking printability. The average surface roughness (Ra) achieved by matting greater than 10 µm, on the other hand, is not preferred because the over sheet on the outermost side of the card becomes inferior in smoothness or has deteriorated surface gloss and in addition, printed characters, images, and the like become inferior in vividness.

### (Antioxidant and/or coloring preventing agent)

In order to stabilize the molecular weight or color hue during molding or forming processing, a phenolic antioxidant or phosphite ester-based coloring preventing agent may be added as needed to the polymer alloy constituting the sheet for card according to the present invention without damaging the object of the present invention.

### (Antioxidant)

Examples of the phenolic antioxidant include α-tocopherol, butylhydroxytoluene, sinapyl alcohol, vitamin E, n-octadecyl-3-(3,5-di-tert-butyl-4-hydroxyphenyl)propionate, 3,5-di-tert-butyl-4-hydroxytoluene; pentaerythrityltetrakis[3-(3,5-di-tert-butyl-4-hydroxyphenyl)propionate], triethyleneglycol-bis[3-(3-tert-butyl-5-methyl-4-hydroxyphenyl)propionate], 1,6-hexanediol-bis[3-(3,5-di-tert-butyl-4-hydroxyphenyl)propionate], 2-tert-butyl-6-(3'-tert-butyl-5'-methyl-2'-hydroxybenzyl)-4-methylphenylacrylate, 2,6-di-tert-butyl-4-(N,N-dimethylaminomethyl)phenol, 3,5-di-tert-butyl-4-hydroxybenzylphosphonate-diethyl ester, 2,2'-methylenebis(4-methyl-6-tert-butylphenol), 2,2'-methylenebis(4-ethyl-6-tert-butylphenol), 4,4'-methylenebis(2,6-di-tert-butylphenol), 2,2'-methylenebis(4-methyl-6-cyclohexylphenol), 2,2'-dimethylene-bis(6-α-methyl-benzyl-p-cresol), 2,2'-ethylidene-bis(4,6-di-tert-butylphenol), 2,2'-butylidene-bis(4-methyl-6-tert-butylphenol), 4,4'-butylidenebis(3-methyl-6-tert-butylphenol), triethyleneglycol-N-bis-3-(3-tert-butyl-4-hydroxy-5-methylphenyl)propionate, 1,6-hexanediolbis[3-(3,5-di-tert-butyl-4-hydroxyphenyl)propionate], bis[2-tert-butyl-4-methyl-6-(3-tert-butyl-5-methyl-2-hydroxybenzyl)phenyl]terephthalate, 3,9-bis{2-[3-(3-tert-butyl-4-hydroxy-5-methylphenyl)propionyloxy]-1,1,-dimethylethyl}-2,4,8,10-tetraoxaspiro[5,5]undecane, 4,4'-thiobis(6-tert-butyl-m-cresol), 4,4'-thiobis(3-methyl-6-tert-butylphenol), 2,2'-thiobis(4-methyl-6-tert-butylphenol), bis(3,5-di-tert-butyl-4-hydroxybenzyl)sulfide, 4,4'-di-thiobis(2,6-di-tert-butylphenol), 4,4'-tri-thiobis(2,6-di-tert-butylphenol), 2,2-thiodiethylenebis-[3-(3,5-di-tert-butyl-4-hydroxyphenyl)propionate], 2,4-bis(n-octylthio)-6-(4-hydroxy-3',5'-di-tert-butylanilino)-1,3,5-triazine, N,N'-hexamethylenebis-(3,5-di-tert-butyl-4-hydroxyhydrocinnamide), N,N'-bis[3-(3,5-di-tert-butyl-4-hydroxyphenyl)propionyl]hydrazine, 1,1,3-tris(2-methyl-4-hydroxy-5-tert-butylphenyl)butane, 1,3,5-trimethyl-2,4,6-tris(3,5-di-tert-butyl-4-hydroxybenzyl)benzene, tris(3,5-di-tert-butyl-4-hydroxyphenyl)isocyanurate, tris(3,5-di-tert-butyl-4-hydroxybenzyl)isocyanurate, 1,3,5-tris(3,5-di-tert-butyl-4-hydroxybenzyl)isocyanurate, 1,3,5-tris(4-tert-butyl-3-hydroxy-2,6-dimethylbenzyl)isocyanurate, 1,3,5-tris[2-{3-(3,5-di-tert-butyl-4-hydroxyphenyl)propionyloxy}ethyl]isocyanurate, and tetrakis[3-(3,5-di-tert-butyl-4-hydroxyphenyl)propionyloxymethyl]methane.

Of the above-mentioned phenolic antioxidants, n-octadecyl-3-(3,5-di-tert-butyl-4-hydroxyphenyl)propionate, 1,3,5-trimethyl-2,4,6-tris(3,5-di-tert-butyl-4-hydroxybenzyl)benzene, 1,3,5-tris(3,5-di-tert-butyl-4-hydroxybenzyl)isocyanurate, and tetrakis[3-(3,5-di-tert-butyl-4-hydroxyphenyl)propionyloxymethyl]methane are preferred, with n-octadecyl-3-(3,5-di-tert-butyl-4-hydroxyphenyl)propionate being particularly preferred. The above-mentioned hindered antioxidants may be used either singly or in combination of two or more.

### (Coloring preventing agent)

As the coloring preventing agent, for example, phosphite ester-based coloring preventing agents can be used. Examples of the phosphite ester-based coloring preventing agent include triphenyl phosphite, tris(nonylphenyl) phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, 2,2-methylenebis(4,6-di-tert-butylphenyl)octyl phosphite, tris(diethylphenyl) phosphite, tris(di-isopropylphenyl) phosphite, tris(di-n-butylphenyl) phosphite, tris(2,4-di-tert-butylphenyl) phosphite, tris(2,6-di-tert-butylphenyl)phosphite, distearylpentarythritol diphosphite, bis(2,4-di-tert-butylphenyl)pentaerythritol diphosphite, bis(2,6-di-tert-butyl-4-methylphenyl)pentaerythritol diphosphite, bis(2,6-di-tert-butyl-4-ethylphenyl)pentaerythritol diphosphite, phenyl bisphenol A pentaerythritol diphosphite, bis(nonylphenyl)pentaerythritol diphosphite, and dicyclohexylpentaerythritol diphosphite.

Further, as another phosphite ester-based coloring preventing agent, those reactive with a dihydric phenol and having a cyclic structure can also be used. Examples include 2,2'-methylenebis(4,6-di-tert-butylphenyl)(2,4-di-tert-butylphenyl) phosphite, 2,2'-methylenebis(4,6-di-tert-butylphenyl)(2-tert-butyl-4-methylphenyl) phosphite, 2,2'-methylenebis(4-methyl-6-tert-butylphenyl)(2-tert-butyl-4-methylphenyl) phosphite, and 2,2'-ethylidenebis(4-methyl-6-tert-butylphenyl)(2-tert-butyl-4-methylphenyl) phosphite.

Of the above-mentioned phosphite ester-based coloring preventing agents, tris(2,4-di-tert-butylphenyl) phosphite is particularly preferred. These phosphite ester-based coloring preventing agents may be used either singly or in combination of two or more. They may also be used in combination with the phenolic antioxidant.

The polymer alloy constituting the sheet for card according to the present invention may contain an ultraviolet absorber or light stabilizer as needed in order to suppress light degradation resistance of the card without damaging the object of the present invention. It may also contain another additive.

### (Ultraviolet absorber)

Examples of the ultraviolet absorber include benzotriazole compounds typified by 2-(2'-hydroxy-5'-methylphenyl)benzotriazole, 2-(2'-hydroxy-3',5'-di-tert-amylphenyl)benzotriazole, 2-(2'-hydroxy-3',5'-bis(α,α'-dimethylbenzyl)phenylbenzotriazole, 2,2'-methylenebis[4-(1,1,3,3-tetramethylbutyl)-6-(2H-benzotriazol-2-yl)phenol], and a condensate between methyl-3-[3-tert-butyl-5-(2H-benzotriazol-2-yl)-4-hydroxyphenyl]propionate and polyethylene glycol.

Examples of ultraviolet absorbers other than the above-mentioned benzotriazole-based compounds include hydroxyphenyltriazine-based compounds such as 2-(4,6-diphenyl-1,3,5-triazin-2-yl)-5-hexyloxyphenol and 2-(4,6-bis(2,4-dimethylphenyl)-1,3,5-triazin-2-yl)-5-hexyloxyphenol. Additional examples of ultraviolet absorbers include cyclic iminoester-based compounds such as 2,2'-p-phenylenebis(3,1-benzoxazin-4-one), 2,2'-m-phenylenebis(3,1-benzoxazin-4-one), and 2,2'-p,p'-diphenylenebis(3,1-benzoxazin-4-one).

### (Light stabilizer)

As the light stabilizer, it includes hindered amine-based ones typified by bis(2,2,6,6-tetramethyl-4-piperidyl) sebacate, bis(1,2,2,6,6-pentamethyl-4-piperidyl) sebacate, tetrakis(2,2,6,6-tetramethyl-4-piperidyl)-1,2,3,4-butane tetracarboxylate, tetrakis(1,2,2,6,6-pentamethyl-4-piperidyl)-1,2,3,4-butane tetracarboxylate, poly{[6-(1,1,3,3-tetramethylbutyl)amino-1,3,5-triazine-2,4-diyl][(2,2,6,6-tetramethylpiperidyl)imino]hexamethylene[(2,2,6,6-tetramethylpiperidyl)imino]}, and polymethylpropyl-3-oxy-[4-(2,2,6,6-tetramethyl)piperidinyl]siloxane. These light stabilizers exhibit a better performance in light resistance or the like when used in combination with the above-mentioned ultraviolet absorber or in some cases, with various antioxidants.

### (Other additives)

In the present invention, other additives such as colorant, filler, and flame retardant may be added (mixed) or a polymer of a different kind for improving physical properties may be blended as needed without inhibiting the object of the present invention.

### [2] Method of forming sheet for card:

In the present invention, a sheet for card made of a polymer alloy is generally obtained, for example, by melt extrusion into a sheet through a T die, of only the polymer alloy prepared as described above; a polymer alloy composition obtained by adding, to two polymers (PC and PCT), one or more additives selected from lubricants, laser beam energy absorbers, white dyes and/or white pigments, antioxidants, coloring preventing agents, ultraviolet absorbers, light stabilizers, and other additives, depending on the purpose, followed by melt extrusion; a mixture of the polymer alloy and the polymer alloy composition; or the like, but the formation method is not particularly limited.

More specifically, a sheet for card having a predetermined thickness can be formed by charging the polymer alloy or polymer alloy composition as described above in a hopper of an extruder equipped with a T die, melt extruding it within a temperature range of from 200 to 280°C, and then introducing the melt extrudate to a casting roll having a temperature controlled to a predetermined one. The method of forming a sheet for card is not limited to the above-mentioned one, but can be formed by a known method. For example, it can be formed, for example, using the method as described in pages (6) and (7) of JP-A-10-71763. The sheet for card according to the present invention has a single layer structure so that compared with a sheet with a multilayer structure, it has the merit that an apparatus used for formation thereof is simple and in addition, it can be formed easily. The sheet for card according to the present invention has a single layer structure so that it is advantageous compared with a sheet with a multilayer structure, an apparatus used for formation is simple and in addition, the sheet can be formed easily.

After characters, charts, and the like are printed on the sheet for card according to the present invention through sublimation type heat transfer printing or characters, symbols, images, and the like are laser marked on the sheet, a sheet having transparency may be attached (adhered) or a coating layer made of a resin may be formed on one side or both sides of the sheet for card according to the present invention as needed. By doing so, the printed characters or charts or laser-marked characters, symbols, images and the like do not disappear easily even by rubbing. A plastic card or the like having such a sheet for card is also excellent from the standpoint of security. Examples

The present invention will hereinafter be described more specifically by Examples and Comparative Examples. The present invention is however not limited by them. In the following Examples and Comparative Examples, "part", "parts", and "%" mean "part by mass", "parts by mass" and "mass%", respectively unless otherwise specifically indicated. Various evaluations and measurements in Examples and Comparative Examples were conducted using the following methods.

### (Transparency, heat resistance, and impact resistance of over sheets A to F)

Transparency, heat resistance, and impact resistance of each of over sheets A to F manufactured in Examples 1 and 2, and Comparative Examples 1 to 4 for use as an over sheet of a plastic card were studied as described below. The results are shown as Examples 1 and 2 and Comparative Examples 1 to 4 in Tables 1 and 2.

**[Table 1]**

| | | Example 1 | Example 2 |
|---|---|---|---|
| Kind of over sheet | | Over sheet A | Over sheet B |
| Evaluation of over sheet | Transparency | ○ | ○ |
| | Heat resistance | ○ | ○ |
| | Impact resistance | ○ | ○ |
| Constitution of multilayer laminate for plastic card | | A/G/G/A | B/H/H/B |
| Evaluation of multilayer laminate for plastic card | Releasability | ○ | ○ |
| | Air bubble elimination | ○ | ○ |
| | Thermal adhesiveness | ○ | ○ |
| | Surface gloss | ○ | ○ |
| | Laser printability | ○ | ○ |

| | | | |
|---|---|---|---|
| * The above-mentioned multilayer laminate for plastic card has a constitution including an over sheet. | | | |

**[Table 2]**

| | | Comp. Ex. 1 | Comp. Ex. 2 | Comp. Ex. 3 | Comp. Ex. 4 |
|---|---|---|---|---|---|
| Kind of over sheet | | Over sheet C | Over sheet D | Over sheet E | Over sheet F |
| Evaluation of over sheet | Transparency | ○ | ○ | ○ | ○ |
| | Heat resistance | Δ | Δ | × | ○ |
| | Impact resistance | Δ | Δ | × | ○ |
| Constitution of multilayer laminate for plastic card | | C/I/I /C | D/J/J /D | E/K/K/ E | F/L/L /F |
| Evaluation of multilayer laminate for plastic card | Releasability | ○ | Δ | × | ○ |
| | Air bubble elimination | ○ | Δ | × | ○ |
| | Thermal adhesiveness | ○ | ○ | ○ | × |
| | Surface gloss | ○ | ○ | ○ | × |
| | Laser printability | ○ | × | × | ○ |

| | | | | | |
|---|---|---|---|---|---|
| * The above-mentioned multilayer laminate for plastic card has a constitution including an over sheet. | | | | | |

### [1] Transparency of over sheet:

The total light transmittance of an over sheet was measured using a spectrophotometer "EYE7000" (product of Macbeth) and transparency was evaluated based on the following criteria.
○: having a total light transmittance of 80% or greater and therefore having excellent transparency.
Δ: having a total light transmittance of 60% or greater but less than 80% and therefore having good transparency.
×: having a total light transmittance less than 60% and therefore having inferior transparency.

### [2] Heat resistance of over sheet:

The Vicat softening temperature of the over sheet was measured (in accordance with JIS K7206) and evaluated based on the following criteria:
○: having a Vicat softening temperature of 140°C or greater.
Δ: having a Vicat softening temperature of 100°C or greater but less than 140°C.
×: having a Vicat softening temperature less than 90°C.

### [3] Impact resistance of over sheet:

The tensile impact strength of the over sheet was measured (in accordance with ISO 8256) and evaluated based on the following criteria:
○: having a tensile impact strength of 2500 KJ/cm² or greater.
Δ: having a tensile impact strength of 1500 or greater but less than 2500 KJ/cm².
×: having a tensile impact strength less than 1500 KJ/cm².

### (Releasability, air bubble elimination, thermal adhesiveness, and laser printability of multilayer laminate for plastic card)

Multilayer laminates for plastic card were obtained by laminating the over sheets A to F manufactured in Examples 1 and 2 and Comparative Examples 1 to 4 and the core sheets G to L manufactured in Examples 3 and 4 and Comparative Examples 5 to 8 so as to have a constitution as shown in Table 1 and Table 2. The releasability, air bubble elimination, thermal adhesiveness, and laser printability of these multilayer laminates for plastic card were evaluated using the following evaluation method, which are shown in Table 1 and Table 2.

### [4] Releasability of multilayer laminate for plastic card

The over sheets A to F obtained in Examples 1 and 2 and Comparative Examples 1 to 4 and the core sheets G to L obtained in Examples 3 and 4 and Comparative Examples 5 to 8 were sandwiched between two chromium-plated steel plates (molds) so as to have an arrangement and constitution as described in Table 1 and Table 2. Then, they were retained for 10 minutes at a hot press temperature of 160°C and a press pressure of 3.923 MPa (40 Kgf/cm²) (heated and pressurized). After cooling to room temperature, the samples sandwiched between chromium-plated steel plates were taken out as were. The releasability when the sample was separated from the chromium-plated steel plates was evaluated.
○: The multilayer laminate can be taken out from the mold easily and nothing remains in the mold, suggesting extremely good releasability.
Δ: The multilayer laminate slightly attaches to the mold and although separable from the mold, it cannot be used because of the damage on the surface of the over sheet located on the outermost side, suggesting inferior releasability.
×: The multilayer laminate attaches to the mold and cannot be separated therefrom, it is broken by forced separation, and an intended multilayer laminate for card cannot be obtained, suggesting markedly inferior releasability.

### [5] Air bubble elimination of multilayer laminate for plastic card

The remaining state of air bubbles in the multilayer laminate after hot press forming as described above was observed and the air bubble elimination was evaluated as follows:
○: No air bubbles are found in the multilayer laminate, suggesting excellent air bubble elimination.
×: Air bubbles remain in the multilayer laminate and defects such as blisters occur, suggesting inferior air bubble elimination.

### [6] Thermal adhesiveness of multilayer laminate for plastic card

The thermal adhesiveness was observed by lightly inserting a cutter blade between the over sheets, the core sheets, or the over sheet and the core sheet constituting the multilayer laminate after hot press forming as described above.
○: No peeling is observed even by light insertion of a cutter blade, suggesting good thermal adhesiveness.
×: Peeling occurs partially or throughout the surface by light insertion of a cutter blade, suggesting inferior thermal adhesiveness.

### [7] Surface gloss of over sheet in multilayer laminate for plastic card

The gloss state of the surface of the over sheet located on the outer most side of the multilayer laminate after hot press forming as described above was visually observed and evaluated based on the following criteria:
○: The surface has good gloss, suggesting excellent visibility.
Δ: The surface has slightly inferior gloss, suggesting good visibility.
×: The surface has insufficient gloss (inferior), suggesting inferior visibility.

### [8] Laser printability of multilayer laminate for plastic card

The surface of the multilayer laminate after hot press forming as described above was exposed to laser beam energy by using a Nd.YVO₄ laser (LT-100SA, product of Laser Technology and RSM103D, product of ROFIN-SINAR Technologies) at a laser irradiation rate of 400 mm/sec and thus, printing by laser marking was conducted. Whether the contrast between the ground color and the printed portion was good or bad and whether abnormalities such as breakage were present or absent on the surface of the over sheet were determined as follows:
○: A contrast ratio is 3 or greater, no breakage is found on the surface of the over sheet, and no burn of a resin constituting the over sheet is found, suggesting excellent laser printability.
Δ: A contrast ratio is 2 or greater but less than 3, breakage is observed on the surface of the over sheet, and no resin burn is found, suggesting good laser printability.
×: A contrast ratio is less than 2 and/or breakage is observed on the surface of an over sheet, and a resin burn is observed, suggesting inferior laser printability.

### (Example 1) Over sheet A

A polymer alloy of an amorphous copolyester ("Eastman Tritan FX200", trade name; product of Eastman Chemical, glass transition temperature: 119°C) (abbreviated as PCT) and a polycarbonate ("Tarflon FN2200A", trade name; product of Idemitsu Kosan, melt volume rate: 12 cm³/10 min) (abbreviated as PC) (blend ratio (mass ratio): PC/PCT=70/30) was used. To 100 parts of the polymer alloy were added 0.2 part of stearic acid monoglyceride ("Rikemal S-100", trade name; product of Riken Vitamin) as a lubricant, 0.2 part of a hindered phenolic antioxidant ("Irganox 1010", trade name; product of BASF) as an antioxidant, and 0.0020 part of carbon black as a laser beam energy absorber. By using a T-die extrusion method, the resulting mixture was extruded into a sheet having a thickness of 100 µm and subjected to double-side matting to give its average surface roughness (Ra) of from 1 to 3 µm. Thus, an over sheet A for plastic card was obtained.

### (Example 2) Over sheet B

A polymer alloy of an amorphous copolyester ("Eastman Tritan FX100", trade name; product of Eastman Chemical, glass transition temperature: 110°C) (abbreviated as PCT) and a polycarbonate ("Tarflon FN2200A", trade name; product of Idemitsu Kosan, melt volume rate: 12 cm³/10 min) (abbreviated as PC) (blend ratio (mass ratio): PC/PCT=70/30) was used. To 100 parts of the polymer alloy were added 0.2 part of stearic acid monoglyceride ("Rikemal S-100", trade name; product of Riken Vitamin) as a lubricant, 0.2 part of a hindered phenolic antioxidant ("Irganox 1010", trade name; product of BASF) as an antioxidant, and 0.0020 part of carbon black as a laser beam energy absorber. By using a T-die extrusion method, the resulting mixture was extruded into a sheet having a thickness of 100 µm and subjected to double-side matting to give its average surface roughness (Ra) of from 1 to 3 µm. Thus, an over sheet B for plastic card was obtained.

### (Comparative Example 1) Over sheet C

A polymer alloy of an amorphous copolyester ("Eastar Copolyester 6763", trade name; product of Eastman Chemical, glass transition temperature: 80°C) (abbreviated as "PETG(1)") and a polycarbonate ("Tarflon FN2200A", trade name; product of Idemitsu Kosan, melt volume rate: 12 cm³/10 min) (abbreviated as PC) (blend ratio (mass ratio): PC/PETG=70/30). To 100 parts of the polymer alloy were added 0.2 part of stearic acid monoglyceride ("Rikemal S-100", trade name; product of Riken Vitamin) as a lubricant, 0.2 part of a hindered phenolic antioxidant ("Irganox 1010", trade name; product of BASF) as an antioxidant, and 0.0020 part of carbon black as a laser beam energy absorber. By using a T-die extrusion method, the resulting mixture was extruded into a sheet having a thickness of 100 µm and subjected to double-side matting to give its average surface roughness (Ra) of from 1 to 3 µm. Thus, an over sheet C for plastic card was obtained.

### (Comparative Example 2) Over sheet D

An amorphous copolyester ("Eastman Titan FX200", trade name; product of Eastman Chemical, glass transition temperature: 119°C) (abbreviated as "PCT") was used. To 100 parts of the PCT were added 0.2 part of stearic acid monoglyceride ("Rikemal S-100", trade name; product of Riken Vitamin) as a lubricant, 0.2 part of a hindered phenolic antioxidant ("Irganox 1010", trade name; product of BASF) as an antioxidant, and 0.0020 part of carbon black as a laser beam energy absorber. By using a T-die extrusion method, the resulting mixture was extruded into a sheet having a thickness of 100 µm and subjected to double-side matting to give its average surface roughness (Ra) of from 1 to 3 µm. Thus, an over sheet D for plastic card was obtained.

### (Comparative Example 3) Over sheet E

An amorphous copolyester ("Eastar Copolyester 6763", trade name; product of Eastman Chemical, glass transition temperature: 80°C) (abbreviated as PETG(1)) was used. To 100 parts of the PETG(1) were added 0.2 part of stearic acid monoglyceride ("Rikemal S-100", trade name; product of Riken Vitamin) as a lubricant, 0.2 part of a hindered phenolic antioxidant ("Irganox 1010", trade name; product of BASF) as an antioxidant, and 0.0020 part of carbon black as a laser beam energy absorber. By using a T-die extrusion method, the resulting mixture was extruded into a sheet having a thickness of 100 µm and subjected to double-side matting to give its average surface roughness (Ra) of from 1 to 3 µm. Thus, an over sheet E for plastic card was obtained.

### (Comparative Example 4) Over sheet F

An aromatic polycarbonate resin ("Tarflon FN2200A", trade name; product of Idemitsu Kosan, melt volume rate: 12 cm³/10 min) (abbreviated as PC) was used. To 100 parts of the PC were added 0.2 part of stearic acid monoglyceride ("Rikemal S-100", trade name; product of Riken Vitamin) as a lubricant, 0.2 part of a hindered phenolic antioxidant ("Irganox 1010", trade name; product of BASF) as an antioxidant, and 0.0020 part of carbon black as a laser beam energy absorber. By using a T-die extrusion method, the resulting mixture was extruded into a sheet having a thickness of 100 µm and subjected to double-side matting to give its average surface roughness (Ra) of from 1 to 3 µm. Thus, an over sheet F for plastic card was obtained.

### (Example 3) Core sheet G

A polymer alloy of an amorphous copolyester ("Eastman Tritan FX200", trade name; product of Eastman Chemical, glass transition temperature: 119°C) (abbreviated as PCT) and a polycarbonate ("Tarflon FN2200A", trade name; product of Idemitsu Kosan, melt volume rate: 12 cm³/10 min) (abbreviated as PC) (blend ratio (mass ratio): PC/PCT=70/30) was used. To 100 parts of the polymer alloy, 0.2 part of stearic acid monoglyceride ("Rikemal S-100", trade name; product of Riken Vitamin) as a lubricant, 0.2 part of a hindered phenolic antioxidant ("Irganox 1010", trade name; product of BASF) as an antioxidant, and 20 parts of titanium oxide as a white pigment. By using a T-die extrusion method, the resulting mixture was extruded into a sheet having a thickness of 200 µm and subjected to double-side matting to give its average surface roughness (Ra) of from 1 to 3 µm. Thus, a core sheet G for plastic card was obtained.

### (Example 4) Core sheet H

A polymer alloy of an amorphous copolyester ("Eastman Tritan FX100", trade name; product of Eastman Chemical, glass transition temperature: 110°C) (abbreviated as PCT) and a polycarbonate ("Tarflon FN2200A", trade name; product of Idemitsu Kosan, melt volume rate: 12 cm³/10 min) (abbreviated as PC) (blend ratio (mass ratio) = PC/PCT = 70/30) was used. To 100 parts of the polymer alloy were added 0.2 part of stearic acid monoglyceride ("Rikemal S-100", trade name; product of Riken Vitamin) as a lubricant, 0.2 part of a hindered phenolic antioxidant ("Irganox 1010", trade name; product of BASF) as an antioxidant, and 20 parts of titanium oxide as a white pigment. By using a T-die extrusion method, the resulting mixture was extruded into a sheet having a thickness of 200 µm and subjected to double-side matting to give its average surface roughness (Ra) of from 1 to 3 µm. Thus, a core sheet H for plastic card was obtained.

### (Comparative Example 5) Core sheet I

A polymer alloy of an amorphous copolyester ("Eastar Copolyester 6763", trade name; product of Eastman Chemical, glass transition temperature: 80°C) (abbreviated as PETG(1)) and a polycarbonate ("Tarflon FN2200A", trade name; product of Idemitsu Kosan, melt volume rate: 12 cm³/10 min) (abbreviated as PC) (blend ratio (mass ratio): PC/PETG=70/30) was used. To 100 parts of the polymer alloy were added 0.2 part of stearic acid monoglyceride ("Rikemal S-100", trade name; product of Riken Vitamin) as a lubricant, 0.2 part of a hindered phenolic antioxidant ("Irganox 1010", trade name; product of BASF) as an antioxidant, and 20 parts of titanium oxide as a white pigment. By using a T-die extrusion method, the resulting mixture was extruded into a sheet having a thickness of 200 µm and subjected to double-side matting to give its average surface roughness (Ra) of from 1 to 3 µm. Thus, a core sheet I for plastic card was obtained.

### (Comparative Example 6) Core sheet J

An amorphous copolyester ("Eastman Tritan FX200", trade name; product of Eastman Chemical, glass transition temperature: 119°C) (abbreviated as PCT) was used. To 100 parts of the PCT were added 0.2 part of stearic acid monoglyceride ("Rikemal S-100", trade name; product of Riken Vitamin) as a lubricant, 0.2 part of a hindered phenolic antioxidant ("Irganox 1010", trade name; product of BASF) as an antioxidant, and 20 part of titanium oxide as a white pigment. By using a T-die extrusion method, the resulting mixture was extruded into a sheet having a thickness of 200 µm and subjected to double-side matting to give its average surface roughness (Ra) of from 1 to 3 µm. Thus, a core sheet J for plastic card was obtained.

### (Comparative Example 7) Core sheet K

An amorphous copolyester ("Eastar Copolyester 6763", trade name; product of Eastman Chemical, glass transition temperature: 80°C) (abbreviated as PETG(1)) was used. To 100 parts of the PETG(1) were added 0.2 part of stearic acid monoglyceride ("Rikemal S-100", trade name; product of Riken Vitamin) as a lubricant, 0.2 part of a hindered phenolic antioxidant ("Irganox 1010", trade name; product of BASF) as an antioxidant, and 20 parts of titanium oxide as a white pigment. By using a T-die extrusion method, the resulting mixture was extruded into a sheet having a thickness of 200 µm and subjected to double-side matting to give its average surface roughness (Ra) of from 1 to 3 µm. Thus, a core sheet K for plastic card was obtained.

### (Comparative Example 8) Core sheet L

An aromatic polycarbonate resin ("Tarflon FN2200A", trade name; product of Idemitsu Kosan, melt volume rate: 12 cm³/10 min) (abbreviated as PC) was used. To 100 parts of the PC, 0.2 part of stearic acid monoglyceride ("Rikemal S-100", trade name; product of Riken Vitamin) as a lubricant, 0.2 part of a hindered phenolic antioxidant ("Irganox 1010", trade name; product of BASF) as an antioxidant, and 20 parts of titanium oxide as a white pigment. By using a T-die extrusion method, the resulting mixture was extruded into a sheet having a thickness of 200 µm and subjected to double-side matting to give its average surface roughness (Ra) of from 1 to 3 µm. Thus, a core sheet L for plastic card was obtained.

### (Consideration)

As shown in Table 1, the over sheets A and B obtained in Examples 1 and 2 are excellent in transparency, heat resistance, and impact resistance. Further, a multilayer laminate for plastic card formed using the over sheet A of Example 1 and the core sheet G of Example 3 and a multilayer laminate for plastic card formed using the over sheet B of Example 2 and the core sheet H of Example 4 were excellent in releasability from a mold and air bubble elimination in a hot press lamination step and also excellent in thermal adhesiveness between layers, surface gloss and laser printability.

On the other hand, in Comparative Example 1 of Table 2, the PC/amorphous copolyester ("Eastar Copolyester 6763", trade name; product of Eastman Chemical, glass transition temperature: 80°C)=70/30 was used for the over sheet C so that the over sheet is inferior in heat resistance and impact resistance. In Comparative Example 2, the amorphous copolyester ("Eastman Tritan FX200", trade name; product of Eastman Chemical, glass transition temperature: 119°C) was used for the over sheet D so that similar to Comparative Example 1, the over sheet is inferior in heat resistance and impact resistance. A multilayer laminate for plastic card formed using this over sheet with the core sheet J was inferior in releasability from a mold and air bubble elimination in the hot press lamination step and also inferior in laser printability. In Comparative Example 3, the amorphous copolyester ("Eastar Copolyester 6763", trade name; product of Eastman Chemical, glass transition temperature: 80°C) was used for the over sheet E so that similar to Comparative Examples 1 and 2, the over sheet is inferior in heat resistance and impact resistance. A multilayer laminate for plastic card formed using this over sheet with the core sheet K was inferior in releasability from a mold and air bubble elimination in a hot press lamination step and also inferior in laser printability. In Comparative Example 4, the aromatic polycarbonate resin ("Tarflon FN2200A", trade name; product of Idemitsu Kosan, melt volume rate: 12 cm³/10 min) was used for the over sheet F so that the over sheet is excellent in transparency, heat resistance, and impact resistance. A multilayer laminate for plastic card formed using this over sheet with the core sheet L was however inferior in thermal adhesiveness in a hot press lamination step and also inferior in surface gloss.

### Industrial Applicability

The sheet for card according to the present invention is suited for use as a sheet constituting a plastic card or the like such as credit card, cash card, ID card, tag card, or ETC card.

## Claims

1. A sheet for card, comprising a polymer alloy of (A) a copolyester resin and (B) an aromatic polycarbonate resin,
wherein the copolyester resin (A) constituting the polymer alloy has (a) a dicarboxylic acid unit composed mainly of a terephthalic acid unit and (b) a glycol unit composed mainly of (I) a 1,4-cyclohexanedimethanol unit and (II) a 2,2,4,4-tetramethylcyclobutane-1,3-diol unit,
a ratio of the 1,4-cyclohexanedimethanol unit (I) to the 2,2,4,4-tetramethylcyclobutane-1,3-diol unit (II), that is, a (I)/(II) ratio is (from 80 to 50 mol%)/(from 20 to 50 mol%),
the copolyester resin (A) has a glass transition temperature of 90°C or greater, and
the copolyester resin (A) and the aromatic polycarbonate resin (B) constituting the polymer alloy are contained in proportions of from 20 to 80 mass% and from 80 to 20 mass%, respectively.

2. The sheet for card according to Claim 1, wherein the sheet for card has a thickness of from 50 to 400 µm.

3. The sheet for card according to Claim 1 or 2, comprising a resin composition obtained by incorporating, in 100 parts by mass of the polymer alloy, from 0.01 to 3 parts by mass of at least one lubricant selected from fatty acids, fatty acid esters, fatty acid amides, and fatty acid metal salts.

4. The sheet for card according to any of Claims 1 to 3, comprising a resin composition obtained by incorporating, in 100 parts by mass of the polymer alloy, from 0.0001 to 3 parts by mass of a laser beam energy absorber.

5. The sheet for card according to Claim 4, for use as a laser marking sheet.

6. The sheet for card according to any of Claims 1 to 3, comprising a resin composition obtained by incorporating, in 100 parts by mass of the polymer alloy, 3 parts by mass or more of a white dye and/or a white pigment.

7. The sheet for card according to Claim 6, for use as a core sheet.

8. The sheet for card according to any of Claims 1 to 7, which has been, on at least one of the surfaces thereof, matted to give an average surface roughness (Ra) from 0.1 to 10 µm.
